# EUROPÄISCHE PATENTSCHRIFT

(11) **EP 3 232 109 B1**
(45) Veröffentlichungstag und Bekanntmachung des Hinweises auf die Patenterteilung: **26.05.2021**
(21) Anmeldenummer: 17165697.8
(22) Anmeldetag: 10.04.2017
(51) Int. Cl.: E03F 3/04, E03C 1/122, F17D 1/00, F16L 5/04, F16L 47/26, F16L 47/24, F16L 33/22, F16L 33/207, F16L 25/00, F16L 13/14

(54) **VERWENDUNG EINES ROHRLEITUNGSSYSTEMS MIT BRANDSCHUTZDÄMMUNG**
USE OF A PIPING SYSTEM WITH PROTECTION AGAINST FIRE
UTILISATION D'UN SYSTÈME DE CONDUITE AYANT UNE ISOLATION ANTI-FEU

(30) Priorität: 11.04.2016 DE 102016106624
(43) Veröffentlichungstag der Anmeldung: 18.10.2017
(73) Patentinhaber: Viega Technology GmbH & Co. KG, 57439 Attendorn (DE)
(72) Erfinder: Arens, Klaus, 57482 Wenden (DE); Rischen, Christian, 59889 Eslohe (DE); Berger, Markus, 04442 Zwenkau (DE); Kasperkowiak, Frank, 57439 Attendorn (DE)
(74) Vertreter: Cohausz & Florack

(56) Entgegenhaltungen:
- EP-A1- 1 265 018
- EP-A1- 1 512 434
- EP-A2- 2 592 191
- DE-U1-202010 016 759
- "SANPRESS ROHRLEITUNGSTECHNIK ROTGUS KATALOG", VIEGA, 2015, pages 189-214,
- "SANFIX UND SANFIX FOSTA ROHLEITUNGSTECHNIK", VIEGA PE-XC/ROTGUSS KATALOG, vol. 12/14, December 2014 (2014-12), pages 261-292, DE

## Beschreibung

Die Erfindung betrifft eine Verwendung eines Rohrleitungssystems, das mindestens eine metallene Rohrleitung zur Durchdringung einer Gebäudedecke oder Gebäudewand umfasst, in einer Abschottung eines Brandabschnittes eines Gebäudeteils gegenüber einem anderen Gebäudeteil des selben Gebäudes, wobei die Abschottung eine Gebäudedecke oder eine Gebäudewand des Gebäudes umfasst, welche durch die mindestens eine metallene Rohrleitung durchdrungen wird, wobei das Rohrleitungssystem des Weiteren mindestens eine Etagenleitung umfasst, die als Kunststoffrohrleitung oder Kunststoff-Metall-Mehrschichtverbundrohrleitung ausgeführt und an einem mit der metallenen Rohrleitung verbundenen metallenen Anschlussstück angeschlossen ist, wobei die metallene Rohrleitung, das Anschlussstück und die Etagenleitung mit mindestens einer mantelförmigen Brandschutzdämmung versehen sind.

Eine bekannte Maßnahme zum vorbeugenden Brandschutz ist die Abgrenzung (Abschottung) einzelner Brandabschnitte gegenüber anderen Gebäudeteilen. Die Brandabschnitte werden durch raumabschließende Bauteile mit Widerstand gegen Feuer voneinander getrennt. Dazu gehören unter anderem Wände (z.B. Brandwände und Trennwände) und Geschossdecken. Diese Bauteile sollen den Brand während einer definierten Zeit auf den von ihnen definierten Brandabschnitt begrenzen.

Dementsprechend enthalten Landesbauordnungen Vorschriften, in denen Brandabschnitte vorgeschrieben werden, wobei ein definierter Brandabschnitt eine bestimmte Feuerwiderstandsklasse von feuerhemmend (F30), hochfeuerhemmend (F60) oder feuerbeständig (F90) aufweisen soll. In den meisten Fällen erfolgt die Trennung der Brandabschnitte durch die Geschossdecken. Die Geschossdecken sind in der Regel als Betondecken mit einer Dicke ≥ 150 mm feuerbeständig ausgebildet und erfüllen somit die Feuerwiderstandsklasse F90.

Um bestimmte Räume eines Gebäudes mit Trinkwasser zu versorgen, Abwasser abzuführen sowie zu Heizzwecken durchdringen hierzu erforderliche Rohrleitungen Geschossdecken sowie Geschosswände. Solche Durchdringungen von Geschossdecken und/oder Geschosswänden, die einen oder mehrere Brandabschnitte begrenzen, müssen in der gleichen Feuerwiderstandsqualität abgeschottet werden. Die Abschottung kann entweder entsprechend der jeweils geltenden technischen Baubestimmung (Leitungsanlagenrichtlinie) oder als geprüfte Abschottung mit einem entsprechenden Verwendbarkeitsnachweis (allgemeines bauaufsichtliches Prüfzeugnis, allgemeine bauaufsichtliche Zulassung oder Zustimmung im Einzelfall) ausgeführt werden.

Für Geschossdecken oder Gebäudewände durchdringende Rohrleitungssysteme stehen verschiedene Abschottungsmöglichkeiten zur Verfügung. Bekannte Abschottungen basieren meist auf aufgebrachten Streckenisolierungen aus Mineralwolle oder auf Basis von im Brandfall aufschäumenden Baustoffen, z.B. Blähgraphit.

Grundsätzlich geht es bei Rohrabschottungen mit Verwendbarkeitsnachweis um folgende einzuhaltende Schutzziele:
- Die Übertragung von Feuer soll verhindert werden;
- die Übertragung von Rauch soll verhindert werden; und
- die Übertragung von Temperatur auf die dem Feuer abgewandte Seite nur im begrenzten Rahmen (< 140 Kelvin im Durchschnitt und < 180 Kelvin an einem Punkt).

Entsorgungsleitungen werden heute üblicherweise in einer sogenannten "Mischinstallation" aus Metallrohren und Kunststoffrohren auf den Baustellen realisiert. Zum Beispiel werden Abwasserrohrleitungen aus Metallguss mit Übergang auf brennbare Anschlussleitungen aus Kunststoff in den Etagen installiert (siehe z.B. DE 20 2010 016 759 U1). Es existieren entsprechend geprüfte Lösungen. Diese basieren in der Regel auf einem Verschluss oder einer Reduzierung des Querschnitts der vertikalen metallenen Strangleitung oder auf dem Verschluss bzw. der Reduzierung des Querschnitts der Anschlussleitung (Etagenanschlussleitung) an der Strangleitung mit im Brandfall aufschäumenden Baustoffen.

Bei Versorgungsleitungen (z.B. wasserführenden Heizungsleitungen oder Sanitärleitungen) existieren dagegen keine geprüften Brandschutzlösungen für den Anschluss von Kunststoffleitungen, z.B. als Etagenverteilung ein- oder beidseitig von Geschossdecken, für die eine Feuerwiderstandfähigkeit vorgeschrieben ist, an nichtbrennbare Strangleitungen.

In der Baupraxis werden als Versorgungsleitungen meist metallene, nichtbrennbare Rohrleitungen als vertikale Strangleitungen eingesetzt. Aufgrund von Verlegevorteilen besteht bei den ausführenden Installateuren allerdings der Wunsch bzw. die Forderung, auf den Etagen Kunststoff- bzw. Mehrschichtverbundrohrsysteme einzusetzen. Diese Systeme müssen mit den Strangleitungen verbunden werden. Als Anbindungspunkt wäre der Übergang unmittelbar oberhalb der Geschossdecke, also direkt in dem neuen Brandabschnitt wünschenswert.

Die Abschottungen von metallenen Rohrleitungen bestehen in der Praxis aus Streckenisolierungen, z.B. in Form von Rohrschalen oder Rohrmänteln aus Mineralwolle. Diese Abschottungen werden üblicherweise so ausgeführt, dass die Streckenisolierung auch in den brandabgewandten Bereich hineinragt. Dementsprechend werden in der Baupraxis bei Versorgungsleitungen auch Kombinationen aus Metallleitungen (für den vertikalen Strang) und Kunststoffleitungen (für die Etagenverteilung) nach den Empfehlungen der Hersteller solcher Rohrisolierungen (z.B. Firma Rockwool®) gebaut. Für diese Kombinationen von Rohrleitungen aus verschiedenen Werkstoffen ("Mischinstallationen") existieren jedoch bislang keine amtlichen Prüfnachweise. Die Hersteller der Rohrisolierungen empfehlen bestimmte erforderliche Dämmlängen auf der brandabgewandten Seite. So empfiehlt z.B. die Firma Rockwool ® in Bezug auf das Abschottungssystem "Conlit ® 150 U" mit Rohrschalen "Rockwool 800" einen Anschluss von brennbaren Kunststoffrohrleitungen am nichtbrennbaren metallenen Rohrleitungsstrang erst nach einer Dämmlänge ≥ 1000 mm ab der Deckendurchdringung, also nicht direkt oberhalb der Geschossdecke.

Bei Installateuren und anderen Anwendern besteht jedoch der Wunsch, die Etagenverteilung aus brennbaren Rohren direkt oberhalb der Geschossdecke am metallenen Rohrleitungsstrang (Steigstrang) anschließen zu können.

Die EP 1 512 434 A1 beschreibt ein Brandschutzelement zur Durchführung von Abwasserrohrleitungen durch eine Decke oder Wand, umfassend ein auch bei Hitzeeinwirkung im Brandfall formstabiles, in der Decke oder Wand anzubringendes Rohrleitungsteil aus Metall mit einem oberen Ankopplungselement zum Ankoppeln einer oberen Rohrleitung und einem unteren Ankopplungselement zum Ankoppeln einer unteren Rohrleitung. In dem Innenraum des Rohrleitungsteils ist ein Sperrkörper aus Intumeszenzmaterial angeordnet, der im Fertigungszustand den Innenraum freilässt und bei Hitzeeinwirkung im Brandfall aufquillt und den Innenraum verschließt. Ferner kann das Brandschutzelement ein Hülsrohr aus feuerbeständigem Material aufweisen, welches in der Decke oder Wand einbetonierbar oder in eine Kernbohrung in der Decke oder Wand einsetzbar ist, wobei das Hülsrohr Halteeinrichtungen zum Halten des Rohrleitungsteils aufweist.

Die EP 1 265 018 A1 offenbart ein Stützrohr für eine Pressrohrverbindung, mit einem in ein Rohr einfügbaren Stutzen und einem sich daran anschließenden aus dem Rohr herausragenden Abschnitt, dadurch gekennzeichnet, dass in dem Stützrohr mindestens eine durchgehende Öffnung vorgesehen ist, die durch Verpressen des Rohres im Bereich des Stutzens abdichtbar ist. Die Öffnung kann dabei sowohl in radialer als auch in axialer Richtung des Stutzens ausgebildet sein. Durch die Öffnung wird eine gewollte Undichtigkeit gebildet, so dass ein versehentliches Vergessen des Verpressens des Rohres beim Anschluss an ein Rohrleitungssystem sofort sichtbar wird.

In der EP 2 592 191 A2 geht es um das Problem, die Stagnation in Leitungssystemen kostengünstig und trotzdem effektiv bei einer leichten und sicheren Montage zu vermeiden. Zur Lösung dieses Problems wird in der EP 2 592 191 A2 ein rohrförmiges Verbindungselement vorgeschlagen, welches eine erste Öffnung, eine zweite Öffnung, einen ersten Verbindungsabschnitt, einen zweiten Verbindungsabschnitt, einen Düsenabschnitt und einen Kontrollbereich aufweist. Hierbei sind der erste Verbindungsabschnitt mit einem ersten Anschlussstück verbindbar, der zweite Verbindungsabschnitt mit einem zweiten Anschlussstück verbindbar und der Düsenabschnitt in das zweite Anschlussstück einführbar. Außerdem ist nach der Verbindung mit dem ersten Anschlussstück und dem zweiten Anschlussstück der Kontrollbereich von außen sichtbar.

Die DE 20 2010 016 759 U1 beschreibt ein System zur Verbindung sowie zur feuerbeständigen, rauchdichten Abschottung von Rohren und Rohrsystemen, insbesondere zur Verbindung von Kombinationen aus nichtbrennbaren mit brennbaren Rohren eines Hausentwässerungssystem. Das System umfasst einen Spannverbinder zur Axialverbindung mit mindestens einem Rohr sowie eine sich an den Spannverbinder anschließende Brandschutzmanschette mit Mitteln zur Erwirkung eines Rohrverschlusses unter Hitzeeinwirkung. Die Brandschutzmanschette ist dabei fest mit dem Spannverbinder verbunden und umgibt ein mit dem Spannverbinder verbundenes brennbares Rohr, wobei die Mittel zur Erwirkung eines Rohrverschlusses unter Hitzeeinwirkung mindestens teilumseitig in der Brandschutzmanschette angeordnet sind.

In dem Katalog "Sanpress Rohrleitungstechnik Rotguss", Viega, 2015, S. 189-214, sind verschiedene Rohre, Bögen, T-Stücke, Übergangsstücke/-bögen, Muffen, Reduzierungen, Verschraubungen, Kappen, Stopfen, Flansche, Wandscheiben, Montageeinheiten, Wanddurchführungen, innenliegende Zirkulationsleitungen, Kompensatoren, Rotguss-Absperrventile, Rotguss-Kugelhähne, Unterputz-Freiflussventile, Unterputz-Geradsitzventile, Werkzeuge und Dichtelemente gezeigt, die zur Herstellung unterschiedlicher Rohrleitungssystemen dienen bzw. hierzu verwendet werden können. Unter anderem sind dort metallene Rohre aus nichtrostendem Stahl, T-Stücke aus Rotguss mit Pressanschlüssen und aus EPDM hergestellten Dichtelementen sowie Übergangsstücke aus Rotguss mit Pressanschluss und EPDM-Dichtelement gezeigt. Der Katalog offenbart weder eine Etagenleitung, die als Kunststoffrohrleitung oder Kunststoff-Metall-Mehrschichtverbundrohrleitung ausgeführt ist, noch eine mantelförmige Brandschutzdämmung.

In dem Katalog "Rohrleitungssysteme/Rohrverbindungstechnik Sanpress mit SC-Contur", G3, Z-Maße, 07.17/2014, Viega, S. 1-28 sind verschiedene Rohrbögen aus nichtrostendem Stahl oder Rotguss, Winkel aus Rotguss, T-Stücke aus Rotguss, Übergangsstücke aus Rotguss, Einsteckstücke, Muffen und Verschraubungen jeweils aus Rotguss, Stopfen, Flansche, Wandscheiben, Wanddurchführungen und Montageeinheiten gezeigt. Auch dieser Katalog offenbart weder eine brennbare Etagenleitung, die als Kunststoffrohrleitung oder Kunststoff-Metall-Mehrschichtverbundrohrleitung ausgeführt ist, noch eine mantelförmige Brandschutzdämmung.

Im Katalog "Rohrleitungssysteme/Rohrverbindungstechnik Sanfix Fosta / Sanfix Plus", L1, Z-Maße, 01.6/2014, Viega, S. 1-27, sind schließlich Pressverbinder aus Rotguss zum Anschluss von Kunststoff-Metall-Mehrschichtverbundrohren, nämlich PE-Xc/Al/PE-Xs-Rohren gezeigt. Der Katalog zeigt auf Seite 6, oben, einen Rohrbogen mit der Bezeichnung "Sanfix P-Bogen 90° (AG)", Modell 2114, aus Rotguss. Dieser Rohrbogen weist an einem Ende ein Außengewinde auf, während das andere Rohrbogenende als Einsteckende ausgebildet und mit einem plastisch umformbaren, hülsenförmigen Pressring (Presshülse) umgeben ist. Der Pressring ist über eine ringförmige Halterung mit dem als Einsteckende ausgebildeten Rohrbogenende formschlüssig verbunden. Dieser Katalog offenbart weder eine mantelförmige Brandschutzdämmung noch eine Verwendung eines den besagten Rohrbogen umfassenden Rohrleitungssystems in einer Abschottung eines Brandabschnittes.

In "Sanfix und Sanfix Fosta Rohrleitungstechnik PE-Xs/Rotguss", Viega, Bd. 12/14, Katalog 2015, S. 261-292 sind unter anderem Kunststoff-Metall-Mehrschichtverbundrohre, nämlich PE-Xc/Al/PE-Xs-Rohre für Trinkwasser- und Heizungsinstallationen sowie T-Stücke und Übergangsstücke aus Rotguss mit Pressanschluss gezeigt. Dieser Katalog offenbart weder eine mantelförmige Brandschutzdämmung noch eine Verwendung eines Rohrleitungssystems in einer Abschottung eines Brandabschnittes, die eine Gebäudedecke oder Gebäudewand umfasst, welche durch mindestens eine metallene Rohrleitung durchdrungen wird.

Davon ausgehend liegt der Erfindung die Aufgabe zugrunde, ein Rohrleitungssystem der eingangs genannten Art zu schaffen, welches kostengünstig größere Freiheitsgrade bezüglich der Anordnung der Rohrleitungsverbindung zwischen einem metallenen Rohrleitungsstrang und einer brennbaren Etagenrohrleitung ermöglicht und dabei die drei oben genannten Schutzziele bei Rohrabschottungen mit Verwendbarkeitsnachweis erfüllt.

Diese Aufgabe wird durch eine Verwendung eines Rohrleitungssystems mit den in Anspruch 1 angegebenen Merkmalen gelöst.

Das Rohrleitungssystem wird erfindungsgemäß in einer Abschottung eines Brandabschnittes eines Gebäudeteils gegenüber einem anderen Gebäudeteil des selben Gebäudes verwendet, wobei die Abschottung eine Gebäudedecke oder eine Gebäudewand des Gebäudes umfasst, welche durch die mindestens eine metallene Rohrleitung durchdrungen wird. Das Rohrleitungssystem umfasst mindestens eine metallene Rohrleitung zur Durchdringung einer Gebäudedecke oder Gebäudewand und mindestens eine Etagenleitung, die als Kunststoffrohrleitung oder Kunststoff-Metall-Mehrschichtverbundrohrleitung ausgeführt und an einem mit der metallenen Rohrleitung verbundenen metallenen Anschlussstück angeschlossen ist. Die metallene Rohrleitung, das Anschlussstück und die Etagenleitung sind dabei mit mindestens einer mantelförmigen Brandschutzdämmung aus Mineralwolle mit einem Schmelzpunkt von über 1.000°C versehen. Die erfindungsgemäße Verwendung umfasst darüber hinaus, dass das Anschlussstück in Form eines T-Stücks, Bogens oder Abzweigs ausgeführt ist und plastisch verformbare Pressverbindungsabschnitte aufweist, die jeweils mit einem Ringwulst und einem darin aufgenommenen Dichtungsring versehen sind, wobei die Etagenleitung über ein Übergangsstück an dem Anschlussstück angeschlossen ist, wobei das Übergangsstück ein hülsenförmiges Einsteckteil und einen Pressring aufweist, wobei das Einsteckteil in die Etagenleitung eingesteckt und mit dem Anschlussstück verbunden ist, wobei der Abstand der mittels des Pressrings mit dem Einsteckteil pressverbundenen Etagenleitung von der Mittelachse der metallenen Rohrleitung in einem Bereich von 35 - 150 mm, vorzugsweise im Bereich von 35 - 120 mm liegt, wobei die die metallene Rohrleitung ummantelnde Brandschutzdämmung eine Dämmdicke im Bereich von 20 - 60 mm aufweist, wobei die die Etagenleitung ummantelnde Brandschutzdämmung eine Dämmdicke im Bereich von 15 - 25 mm aufweist, und wobei die die Etagenleitung ummantelnde Brandschutzdämmung unmittelbar an die die metallene Rohrleitung ummantelnde Brandschutzdämmung anschließt und eine Länge von mindestens 10 mm und maximal 320 mm gemessen ab der die metallene Rohrleitung ummantelnden Brandschutzdämmung aufweist.

Das Übergangsstück definiert einen Übergang von dem metallenen Anschlussstück auf die brennbare Etagenleitung, wobei letztere mit dem hülsenförmigen Einsteckteil des Übergangstücks durch radiales und/oder axiales Verpressen des Pressrings verbunden wird bzw. ist. Das Übergangsstück ist somit als Pressverbinder ausgeführt. Der Pressring kann dabei aus Metall oder Kunststoff hergestellt sein. Insbesondere kann der Pressring aus plastisch verformbarem Material hergestellt sein.

Die brennbare Etagenleitung, die als Kunststoff- oder Kunststoff-Metall-Mehrschichtverbundrohrleitung ausgeführt ist, kann auch als Etagenverteilleitung bezeichnet werden.

Durch die erfindungsgemäße Kombination von metallener Rohrleitung (als Strang-oder Steigleitung), metallenem Anschlussstück, Übergangsstück, brennbarer Etagenverteilleitung, Pressverbindung und mantelförmiger Brandschutzdämmung wird eine Übertragung von Feuer und Rauch von dem feuerbelasteten Brandabschnitt in den nächsten Brandabschnitt verhindert bzw. minimiert. Die Temperaturweiterleitung aus dem feuerbelasteten Brandabschnitt in den nächsten Brandabschnitt wird ebenfalls zuverlässig minimiert.

Brandtechnische Versuche haben ergeben, dass das erfindungsgemäß verwendete Rohrleitungssystem in Form einer Decken- bzw. Wanddurchführung die Übertragung von Feuer und Rauch von einem feuerbelasteten Brandabschnitt in den nächsten Brandabschnitt über mindestens 90 Minuten verhindert und somit die Feuerwiderstandsklasse F90 erfüllt; und dies auch dann, wenn die Rohrleitungsverbindung zwischen dem metallenen Rohrleitungsstrang und der brennbaren Etagenleitung zusammen mit der Brandschutzdämmung direkt oberhalb der Geschossdecke bzw. direkt an der Brandwand (Trennwand) auf der brandabgewandten Seite angeordnet wird. Ferner hat sich bei besagten Versuchen ergeben, dass die Temperaturweiterleitung vom feuerbelasteten Brandabschnitt zu der brandabgewandten Seite auf die brennbare Etagenleitung deutlich begrenzt wird, so dass der Temperaturdurchschnittswert des Rohrleitungssystems auf der brandabgewandten Seite unterhalb von 140 Kelvin blieb sowie kein Punkt dieses dem Feuer abgewandten Rohrleitungsabschnitts eine Maximaltemperatur von 180 Kelvin erreichte.

Insbesondere hat sich überraschender Weise gezeigt, dass bei dem erfindungsgemäß verwendeten Rohrleitungssystem die Dämmlänge der mantelförmigen Brandschutzdämmung im Bereich der brennbaren Etagenleitung, die über das Einsteckstück an dem Anschlussstück angeschlossen ist, gemessen ab der Außenseite der den metallenen Rohrleitungsstrang bzw. das Anschlussstück umgebenden Brandschutzdämmung, auf eine minimale Dämmlänge von ca. 10 mm, vorzugsweise ca. 50 mm reduziert werden kann, gleichwohl aber noch die drei oben genannten, bei Rohrabschottungen mit Verwendbarkeitsnachweis einzuhaltenden Schutzziele erfüllt werden.

Das erfindungsgemäß verwendete Rohrleitungssystem bietet somit deutlich größere Freiheitsgrade bezüglich der Anordnung der Rohrleitungsverbindung zwischen einem metallenen Rohrleitungsstrang und einer brennbaren Etagenverteilleitung, und zudem eine Kostenersparnis hinsichtlich der erforderlichen Dämmlängen der zu installierenden Brandschutzdämmung. Die Brandschutzdämmung des erfindungsgemäß verwendeten Rohrleitungssystems ist aus Mineralwolle, die einen Schmelzpunkt von über 1.000°C aufweist, hergestellt, beispielsweise aus Steinwolle. Die mantelförmige Brandschutzdämmung wird typischerweise aus Rohrschalen gebildet, deren Außenseite mit einer Metallfolie, z.B. Aluminiumfolie kaschiert ist. Die Metallfolie wirkt als Dichtung gegen Eindringen von Feuchtigkeit, insbesondere als Dampfsperre.

Nach einer bevorzugten Ausgestaltung des erfindungsgemäß verwendeten Rohrleitungssystems beträgt der Abstand der pressverbundenen Etagenleitung von der Mittelachse der metallenen Rohrleitung das 2-fache bis 3-fache, vorzugsweise das 2,2-fache bis 2,7-fache, des Außendurchmessers der metallenen Rohrleitung.

Das mit der metallenen Rohrleitung verbundene Anschlussstück kann insbesondere so angeordnet werden, dass die die Etagenleitung ummantelnde Brandschutzdämmung die Gebäudedecke berührt oder von dieser mit geringem Abstand, z.B. mit einem Abstand im Bereich von 10 bis 100 mm, vorzugsweise maximal 50 mm angeordnet ist.

Die die Etagenleitung ummantelnde Brandschutzdämmung schließt bei der erfindungsgemäßen Verwendung unmittelbar an die die metallene Rohrleitung ummantelnde Brandschutzdämmung an und weist eine Länge von mindestens 10 mm, vorzugsweise mindestens 50 mm, und maximal 320 mm, weiter bevorzugt maximal 150 mm, gemessen ab der die metallene Rohrleitung ummantelnden Brandschutzdämmung, auf.

Die metallene Rohrleitung (Strang- oder Steigleitung) des erfindungsgemäß verwendeten Rohrleitungssystems besitzt einen Außendurchmesser, der vorzugsweise nicht größer als 54 mm ist, während das Anschlussstück und das Einsteckstück so dimensioniert sind, dass daran eine aus Kunststoff oder einem Kunststoff-Metall-Mehrschichtverbund hergestellte Etagenverteilleitung mit einem Außendurchmesser, welcher zum Beispiel im Bereich von 16 mm bis 32 mm liegt, angeschlossen werden kann.

Das Anschlussstück des erfindungsgemäß verwendeten Rohrleitungssystems ist in Form eines T-Stücks, Bogens oder Abzweigs ausgeführt und weist plastisch verformbare Pressverbindungsabschnitte auf, die jeweils mit einem Ringwulst und einem darin aufgenommenen Dichtungsring versehen sind. Solche Pressverbindungsabschnitte haben sich in der Praxis bewährt und ermöglichen eine schnelle und zuverlässige fluiddichte Verbindung von Rohrleitungen.

Eine vorteilhafte Ausgestaltung der Erfindung sieht vor, dass das Übergangsstück eine das Einsteckteil mit dem Pressring verbindende Halterung aufweist, die beispielsweise ring- oder hülsenförmig ausgebildet ist. Hierdurch sind das Einsteckteil und der Pressring zu einer Einheit konfiguriert, wodurch sich diese Teile bzw. das Übergangsstück bei der Montage gut und einfach handhaben lassen. Die Halterung ist vorzugsweise aus Kunststoff hergestellt. Sofern die Halterung ausschließlich die voranstehend genannte Haltefunktion hat, ist sie vorzugsweise aus einem preiswerten Kunststoff wie z.B. Polypropylen, Polyethylen, Polystyrol, Polyamid oder ähnlichem hergestellt. Im verpressten, also fertig montierten Zustand des Übergangsstücks muss die aus Kunststoff hergestellte Halterung vorzugsweise keine oder nur relativ geringe Kräfte aufnehmen.

Aufgrund der Ausführung aus Kunststoff besitzt die Halterung eine relativ geringe Wärmeleitzahl. Sie kann somit dazu beitragen, dass im Brandfall Wärme bzw. Temperatur aus dem feuerbelasteten Brandabschnitt nur begrenzt auf die dem Feuer abgewandte Seite übertragen wird.

Sofern die Halterung gegebenenfalls auch eine Pressverbindungsfunktion hat, ist sie vorzugsweise aus einem sogenannten Hochleistungskunststoff oder thermoplastischen Kunststoff hergestellt, der einen Schmelzpunkt von über 350°C, vorzugsweise über 500°C besitzt und/oder der bis zu einer Temperatur von mindestens 150°C, vorzugsweise mindestens 180°C formstabil ist. Bei diesem Kunststoff kann es sich beispielsweise um Polyphenylensulfon, Polysulfon oder Polyethersulfon handeln.

Allerdings kann das Übergangsstück des erfindungsgemäß verwendeten Rohrleitungssystems auch ohne eine das Einsteckteil mit dem Pressring verbindende Halterung ausgeführt werden. Das Übergangsstück ist dann beispielsweise nach Art eines sogenannten Schiebehülsesystems ausgeführt, bei dem der Pressring hülsenförmig ausgebildet ist und auf die anzuschließende Etagenleitung geschoben wird, das mit dem Einsteckteil des Übergangsstücks zu verbindende Ende der Etagenleitung radial aufgeweitet wird, das Einsteckteil in das aufgeweitete Ende eingesteckt und der Pressring als Druckhülse sodann auf das aufgeweitete Ende der Etagenleitung geschoben, d.h. axial verpresst wird.

Eine weitere vorteilhafte Ausgestaltung des erfindungsgemäß verwendeten Rohrleitungssystems ist dadurch gekennzeichnet, dass der Pressring plastisch verformbar ist, wobei ein innerhalb des Pressrings angeordneter Stützabschnitt des hülsenförmigen Einsteckteils außenseitig mit einem Dichtungsring versehen ist. Mit dem so ausgeführten Einsteckstück lässt sich ein wasserdichter Anschluss der Etagenleitung schnell und zuverlässig ausführen. Der Dichtungsring ist dabei typischerweise in einer umlaufenden Ringnut des Stützabschnitts gehalten. Das hülsenförmige Einsteckteil des Einsteckstücks kann aus Metall, z.B. Rotguss, oder aus hochfestem Kunststoff bestehen. Vorzugsweise weist der Stützabschnitt zwischen dem Dichtungsring und seinem freien Ende einen verzahnten Halteabschnitt auf, wobei die Zahnflanken in Richtung des Dichtungsrings gesehen schräg ansteigen und in Richtung des freien Endes des Einsteckteils gesehen wesentlich steiler ausgeführt oder im Wesentlichen senkrecht zu der Mittelachse des Einsteckteils ausgebildet sind.

Eine andere vorteilhafte Ausgestaltung des erfindungsgemäß verwendeten Rohrleitungssystems ist dadurch gekennzeichnet, dass das hülsenförmige Einsteckteil aus einem metallenen Hülsenteil und einem damit verbundenen hülsenförmigen . Stützkörper aus Kunststoff gebildet ist, wobei der Stützkörper koaxial innerhalb des Pressrings und der hülsenförmigen Halterung angeordnet ist. Der aus Kunststoff hergestellte Stützkörper ermöglicht ohne Dichtungsring (O-Ring) einen schnellen und zuverlässigen wasserdichten Anschluss der Etagenleitung. Dieser Stützkörper hat im Wesentlichen den gleichen Ausdehnungskoeffizienten wie der Kunststoff bzw. Kunststoff-Metall-Mehrschichtverbund der Etagenverteilleitung. Hierdurch wird eine kunststoffgerechte, besonders sichere Pressverbindung erzielt.

In diesem Zusammenhang sieht eine weitere Ausgestaltung des erfindungsgemäß verwendeten Rohrleitungssystems vor, dass der Pressring und die hülsenförmige Halterung konische, aneinander liegende Kontaktflächen aufweisen, wobei der Pressring unter radialer Pressung der hülsenförmigen Halterung axial zu derselben in Richtung des metallenen Hülsenteils des Einsteckteils verschiebbar ist.

Nach einer weiteren Ausgestaltung sind die ring- oder hülsenförmige Halterung und/oder der hülsenförmige Stützkörper des Übergangsstücks aus Polyphenylensulfon, Polysulfon oder Polyethersulfon hergestellt. Diese thermoplastischen Polymere zeichnen sich jeweils durch eine hohe Zähigkeit und Stabilität bei hohen Temperaturen aus. Sie sind in einem Temperaturbereich von - 100°C bis +200°C einsetzbar.

Zur Minimierung der Temperaturweiterleitung aus dem feuerbelasteten Brandbereich zu der dem Feuer abgewandten Seite ist es vorteilhaft, dass die die metallene Rohrleitung ummantelnde Brandschutzdämmung erfindungsgemäß eine Dämmdicke im Bereich von 20 bis 60 mm, vorzugsweise im Bereich von 20 bis 50 mm aufweist.

Ferner ist es zur Minimierung der Temperaturweiterleitung aus dem feuerbelasteten Brandbereich zu der dem Feuer abgewandte Seiten vorteilhaft, wenn die die metallene Rohrleitung unterhalb der Gebäudedecke ummantelnde Brandschutzdämmung eine Länge von mindestens 900 mm, vorzugsweise mindestens 1.500 mm, besonders bevorzugt mindestens 2.000 mm, gemessen ab der Oberseite der Gebäudedecke, aufweist.

Die die Etagenleitung bzw. das Übergangsstück ummantelnde Brandschutzdämmung weist bei dem erfindungsgemäß verwendeten Rohrleitungssystem eine Dämmdicke im Bereich von 15 bis 25 mm, vorzugsweise im Bereich von 18 bis 22 mm auf.

Zur Sicherstellung einer hohen Trinkwasserqualität bzw. zur Abschottung von Warmwasser-Heizungsleitungen gegen Eindringen von Luftsauerstoff weist die aus Kunststoff gefertigte Etagenleitung des erfindungsgemäßen Rohrleitungssystems vorzugsweise eine Sauerstoffsperrschicht aus Aluminium auf.

Um der Etagenleitung eine hohe Resistenz gegenüber mechanischen, thermischen und chemischen Einflüssen zu verleihen, kann sie nach einer bevorzugten Ausgestaltung der Erfindung ein Innenrohr aus Polyethylen, insbesondere aus physikalisch vernetztem Polyethylen aufweisen.

Nachfolgend wird die Erfindung anhand einer Ausführungsbeispiele darstellenden Zeichnung näher erläutert. Es zeigen:
- Fig. 1: einen Abschnitt einer Geschossdecke eines Gebäudes in einem Vertikalschnitt mit einer die Geschossdecke durchdringenden, abgeschotteten Rohrleitung, von der ober- und unterseitig der Geschossdecke je eine Etagenleitung abzweigt;
- Fig. 2: die Geschossdecke mit dem Rohrleitungssystem aus Fig. 1 in einer gegenüber Fig. 1 um 90° gedrehten Vertikalschnittansicht;
- Fig. 3: eine vergrößerte Detailansicht des in Fig. 1 direkt oberhalb der Geschossdecke angeordneten Abzweiganschlusses;
- Fig. 4 und 5: ein Anschlussstück mit einem Einsteckstück zum Anschluss einer brennbaren Etagenleitung an einem nichtbrennbaren Rohrleitungsstrang gemäß Fig. 3, in einer Schnittansicht bzw. einer perspektivischen Darstellung; und
- Fig. 6 und 7: ein Anschlussstück mit einem Einsteckstück zum Anschluss einer brennbaren Etagenleitung an einem nichtbrennbaren Rohrleitungsstrang gemäß einem weiteren Ausführungsbeispiel, in einer Schnittansicht bzw. einer perspektivischen Darstellung.

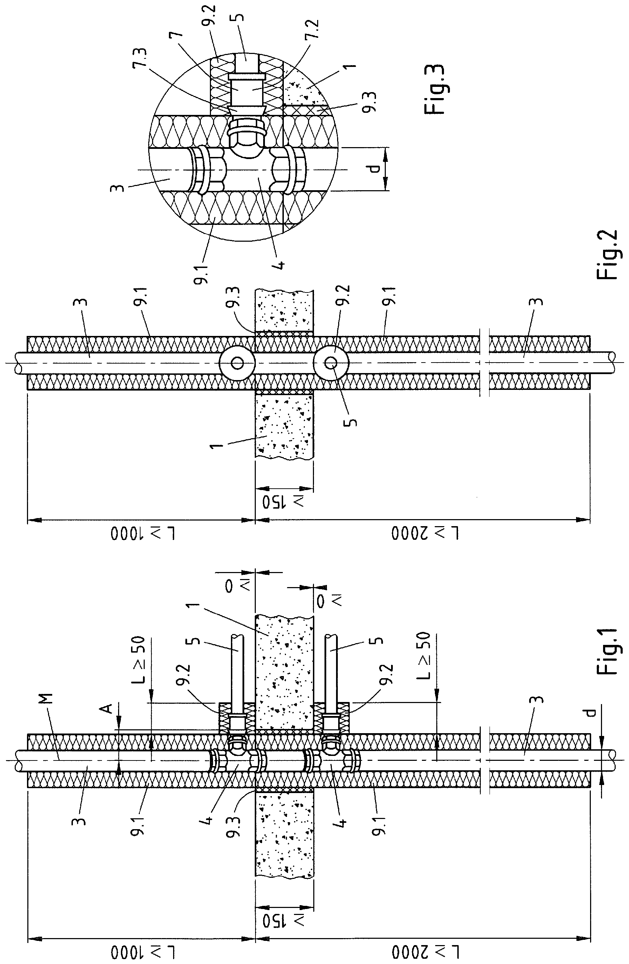

In den Figuren 1 und 2 ist ein Abschnitt einer massiven Geschossdecke 1 dargestellt, die einen unteren Etagenbereich eines Gebäudes von einem oberen Etagenbereich des Gebäudes trennt. Die Gebäudedecke 1 ist als Betondecke mit einer Stärke von mindestens 150 mm ausgebildet und entspricht der Feuerwiderstandsklasse R90. Die Gebäudedecke (Betondecke) 1 trennt somit einen möglicherweise feuerbelasteten Brandabschnitt von einem dem Feuer abgewandten Brandabschnitt.

Die Geschossdecke 1 weist eine Deckendurchführung 2 auf, durch die eine metallene Rohrleitung 3 als sanitäre Versorgungsleitung oder wasserführende Heizungsleitung von einem Geschoss in ein nächstes Geschoss geführt ist. Die Rohrleitung 3 ist beispielsweise aus Kupfer, Edelstahl, C-Stahl der Sorte 1.0308 oder 1.2015 oder aus Stahlrohr gemäß DIN EN 10220 oder 10265 hergestellt. Sie kann auch als Rohrleitungsstrang, Steigleitung oder Steigstrang bezeichnet werden. Ihr maximaler Rohraußendurchmesser beträgt beispielsweise 54 mm. Für die metallene, nichtbrennbare Rohrleitung 3 geeignete Rohre sind mit einem Außendurchmesser im Bereich von 12 mm bis 54 mm erhältlich.

Die Rohrleitung 3 ist mit mindestens einem metallenen Anschlussstück 4 versehen, um an der Rohrleitung eine Etagenleitung bzw. Etagenverteilleitung 5 anzuschließen. Die Etagenleitung (Etagenverteilleitung) 5 ist dabei als Kunststoffrohrleitung oder Kunststoff-Metall-Mehrschichtverbundrohrleitung ausgeführt. Sie besitzt beispielsweise einen Rohraußendurchmesser im Bereich von 16 bis 32 mm und eine Rohrwanddicke im Bereich von 2,2 bis 3,2 mm.

Die als Mehrschichtverbundrohrleitung ausgeführte Etagenleitung besitzt ein Innenrohr aus Kunststoff, dessen Außenseite vollständig mit einer Sauerstoffsperre aus Aluminium umgeben ist. Die Außenseite der Aluminiumschicht ist schließlich vollständig mit einem Kunststoffmantel versehen, der ebenso wie das Innenrohr vorzugsweise aus Polyethylen, besonders bevorzugt aus physikalisch vernetztem Polyethylen gebildet ist.

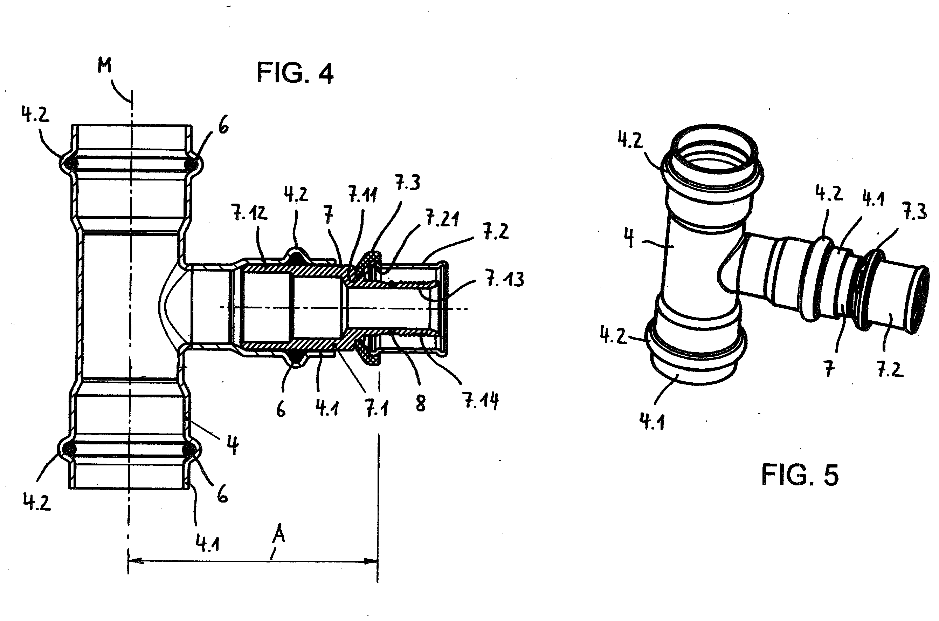

In dem in den Figuren 1 bis 3 gezeigten Ausführungsbeispiel ist das Anschlussstück 4 in Form eines T-Stücks ausgebildet. Alternativ kann das Anschlussstück auch in Form eines Bogens oder Abzweigs ausgebildet sein. Das Anschlussstück 4 weist dabei jeweils plastisch verformbare Pressverbindungsabschnitte 4.1 mit Ringwulst 4.2 und darin aufgenommenem Dichtungsring 6 auf (siehe auch Figuren 4 bis 7). Als Werkstoff für das metallische Anschlussstück 4 sind die oben in Bezug auf die metallische Rohrleitung 3 genannten Werkstoffe sowie Rotguss geeignet.

Die Etagenleitung 5 wird nicht direkt an dem Anschlussstück 4 angeschlossen. Erfindungsgemäß ist die Etagenleitung (Etagenverteilleitung) 5 über ein Übergangsstück 7 an dem Anschlussstück 4 angeschlossen. Das Übergangsstück 7 ist im Wesentlichen aus einem hülsenförmigen Einsteckteil 7.1 und einem Pressring 7.2 aufgebaut. Der Pressring 7.2 besteht vorzugsweise aus Metall. Zusätzlich kann das Übergangsstück 7 auch noch eine das Einsteckteil 7.1 mit dem Pressring 7.2 verbindende, ring- oder hülsenförmige Halterung 7.3 aufweisen, die vorzugsweise aus Kunststoff hergestellt ist. Das Übergangsstück 7 und das Anschlussstück 4 sind so dimensioniert, dass im fertig montierten Zustand des Rohrleitungssystems der Abstand A der mittels des Pressrings 7.2 mit dem Einsteckteil 7.1 pressverbundenen Etagenleitung 5 von der Mittelachse M der metallenen Rohrleitung 3 in einem Bereich von 35 - 150 mm liegt. Das Übergangsstück 7 bildet somit einen Übergang von dem metallenen, nichtbrennbaren Anschlussstück 4 zu der brennbaren Etagenverteilleitung 5.

Beispielsweise kann bei dem Rohrleitungssystem der Abstand A der pressverbundenen Etagenleitung 5 von der Mittelachse M der metallenen Rohrleitung 3 das 2-fache bis 3-fache, vorzugsweise das 2,2-fache bis 2,7-fache, des Außendurchmessers d der Rohrleitung 3 betragen.

In dem in den Figuren 3 bis 5 dargestellten Ausführungsbeispiel ist der Pressring 7.2 des Übergangsstücks 7 plastisch verformbar ausgebildet. Der Pressring 7.2 kann auch als Presshülse bezeichnet werden. Er weist an seinem mit der Halterung 7.3 verbundenen Ende einen Ringwulst bzw. eine Durchmessererweiterung 7.21 auf, der/die von der ringförmigen Halterung 7.3 formschlüssig sowie kraftschlüssig umgriffen ist. Die ringförmige Halterung 7.3 ist ihrerseits an einer äußeren Ringnut 7.11 des hülsenförmigen Einsteckteils 7.1 formschlüssig sowie kraftschlüssig gehalten. Das Einsteckteil 7.1 ist aus Metall, beispielsweise Rotguss gefertigt, und einteilig ausgebildet. Es weist einen in den Pressverbindungsabschnitt 4.1 des Anschlussstücks 4 einzusteckenden Abschnitt 7.12 und einen in das Ende der Etagenleitung 5 einsteckbaren hülsenförmigen Stützabschnitt 7.13 auf. Der Pressring 7.2 ist radial zu dem Stützabschnitt 7.13 beabstandet, um mit letzterem einen Ringspalt zur Aufnahme des zu verpressenden Endes der Etagenleitung 5 zu bilden.

Der innerhalb des Pressrings 7.2 angeordnete, in die Etagenleitung einzusteckende Stützabschnitt 7.13 des Einsteckteils ist außenseitig mit einem Dichtungsring (O-Ring) 8 versehen. Der Dichtungsring 8 ist in einer umlaufenden Ringnut des Stützabschnitts 7.13 gehalten. Zudem weist der Stützabschnitt 7.13 zwischen dem Dichtungsring 8 und seinem freien Ende eine Verzahnung 7.14 mit sägezahnförmigem Profil auf, wobei die Zahnflanken in Richtung des Dichtungsrings 8 gesehen schräg ansteigen und in Richtung des freien Endes des Einsteckteils 7.1 gesehen wesentlich steiler ausgeführt oder im Wesentlichen senkrecht zu der Mittelachse des Einsteckteils ausgebildet 7.1 sind.

Nachdem die Pressverbindungen des metallenen Anschlussstücks 4 mit der nichtbrennbaren Rohrleitung 3 und dem Übergangsstück 7 sowie des Übergangsstücks 7 mit der Etagenleitung 5 ausgeführt sind, werden die nichtbrennbare Rohrleitung 3, das Anschlussstück 4, das Übergangsstück 7 sowie eine relativ kurze Teillänge der Etagenleitung 5 mit einer mehrteiligen, mantelförmigen Brandschutzdämmung 9.1, 9.2 versehen. Die Brandschutzdämmung 9.1, 9.2 ist aus Mineralwolle, vorzugsweise Steinwolle, mit einem Schmelzpunkt von über 1.000°C hergestellt. Sie wird beispielsweise aus entsprechenden Rohrschalen gebildet, die außenseitig vorzugsweise mit Aluminiumfolie beschichtet sind. Die Rohrschalen werden mit nichtbrennbaren Bindemitteln (nicht gezeigt), z.B. verzinkten Drähten, zusammen gehalten.

In dem unteren, möglicherweise feuerbelasteten Geschossraum (Brandabschnitt) wird die nichtbrennbare Rohrleitung (Steigleitung) 3 mit einer entsprechenden mehrteiligen Brandschutzdämmung 9.1 ummantelt, die eine Dämmdicke im Bereich von 20 bis 50 mm aufweist. Die Dämmlänge beträgt hier beispielsweise mindestens 2000 mm, gemessen ab der Oberseite der Betondecke 1. Es ist hier gegebenenfalls aber eine kürze Dämmlänge möglich; beispielsweise kann die Brandschutzdämmung 9.1 auch eine Dämmlänge im Bereich von 900 mm bis 2000 mm, insbesondere im Bereich von 900 mm bis 1500 mm aufweisen. Die in dem unteren Geschossraum auf der metallenen Rohrleitung (Steigleitung) 3 angebrachte Brandschutzdämmung 9.1 erstreckt sich bis in die Deckendurchführung 2 und endet etwa an der Oberseite der Geschossdecke 1. Es ist auch möglich, die metallene Rohrleitung 3 innerhalb der Deckendurchführung 2 mit einer Schale oder Bandage aus Mineralwolle zu ummanteln, die eine geringere Dämmdicke aufweist als die daran anschließende mantelförmige Brandschutzdämmung 9.1. Der Ringspalt zwischen der Deckendurchführung 2 und der Außenseite der Brandschutzdämmung 9.1 oder Bandage wird bzw. ist mit einer Dichtungsmasse 9.3 verfüllt, die unter Hitzeeinwirkung, insbesondere im Brandfall aufschäumt. Hierdurch werden eventuell auftretende Fugen in der Deckendurchführung 2 rauchdicht verschlossen. Die Dichtmasse 9.3 kann auch aus formbeständigen nichtbrennbaren Baustoffen, z.B. aus Mörtel, Beton und/oder Gips bestehen. Alternativ oder zusätzlich kann der Ringspalt zwischen der Deckendurchführung 2 und der Außenseite der Brandschutzdämmung 9.1 oder Bandage auch mit Mineralwolle, die einen Schmelzpunkt von mehr als 1.000°C aufweist, ausgestopft werden.

Oberhalb der Geschossdecke 1 wird die nichtbrennbare Rohrleitung (Steigleitung) 3 ebenfalls mit einer Brandschutzdämmung 9.1 ummantelt, die eine Dämmdicke im Bereich von beispielsweise 20 bis 50 mm aufweist. Die Dämmlänge beträgt hier vorzugsweise mindestens 1000 mm, gemessen ab der Oberseite der Betondecke 1.

Das Übergangsstück 7 und eine Teillänge der brennbaren Etagenleitung 5 sind mit einer Brandschutzdämmung 9.2 ummantelt, die eine Dämmdicke von mindestens 20 mm aufweist. Das Anschlussstück 4 ist dabei in Bezug auf die Deckendurchführung 2 so an der metallenen Steigrohrleitung 3 angeordnet, dass die Etagenleitung 5 unter Einbeziehung der Brandschutzdämmung 9.2 möglichst nahe an der Geschossdecke 1, vorzugsweise direkt oberhalb (oder unterhalb, vgl. Fig. 1) der Geschossdecke 1 verläuft. Die Dämmlänge der dem Einsteckstück 7 und der Etagenleitung 5 zugeordneten Brandschutzdämmung 9.2 kann relativ kurz bemessen werden. Sie beträgt beispielsweise mindestens 50 mm, gemessen ab der Außenseite der die Steigrohrleitung 3 ummantelnden Brandschutzdämmung 9.1. Die Dämmlänge der Brandschutzdämmung 9.2 kann hier aber gegebenenfalls auch kürzer ausgeführt werden, erfindungsgemäß beträgt die Dämmlänge Brandschutzdämmung 9.2 hier mindestens 10 mm; vorzugsweise liegt sie in einem Bereich von 10 mm bis 50 mm.

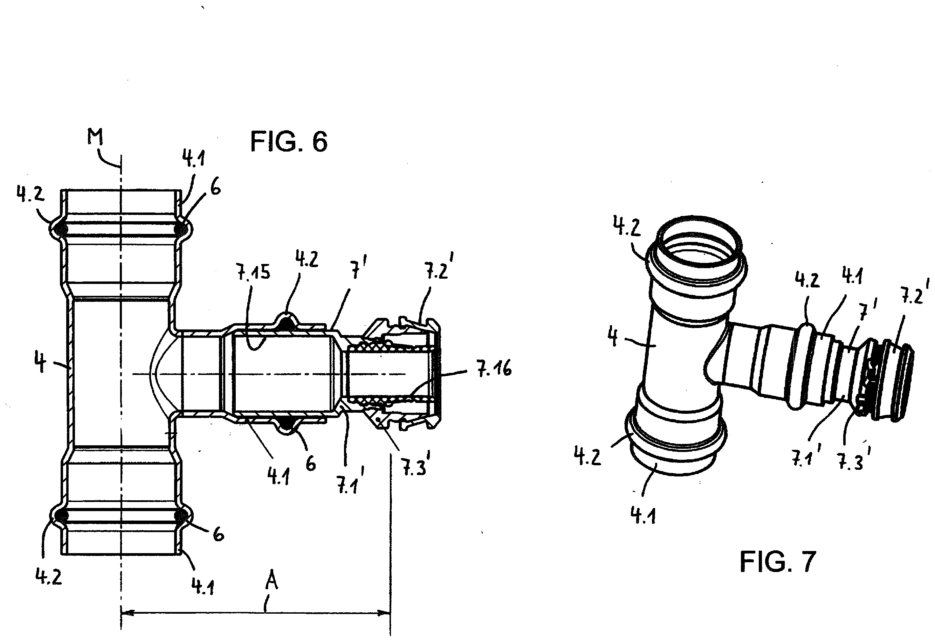

In den Figuren 6 und 7 ist ein weiteres Ausführungsbeispiel eines Übergangsstücks 7' zum indirekten Anschluss einer brennbaren Etagenleitung 5 an einem metallenen Anschlussstück 4, welches mit einer nichtbrennbaren Rohrleitung (Steigleitung) 3 verbunden wird, dargestellt. Im Unterschied zu dem in den Figuren 3 bis 5 dargestellten Übergangsstück 7, ist das hülsenförmige Einsteckteil 7.1' dieses Übergangsstücks 7' aus einem metallenen Hülsenteil 7.15 und einem damit verbundenen hülsenförmigen Stützkörper 7.16 aus hochfestem, temperaturstabilen Kunststoff, vorzugsweise Polyphenylensulfon gebildet. Der Stützkörper 7.16 ist formschlüssig in dem Hülsenteil 7.15 gehalten und koaxial innerhalb eines Pressrings 7.2' und einer hülsenförmigen Halterung 7.3' angeordnet ist. Der Pressring 7.2' ist vorzugsweise aus Metall hergestellt. Er kann auch als Druckring oder Druckhülse bezeichnet werden. Der Pressring 7.2' und die hülsenförmige Halterung 7.3' haben konische, aneinander liegende Kontaktflächen, wobei der Pressring 7.2' unter radialer Pressung der hülsenförmigen Halterung 7.3' axial zu derselben in Richtung des metallenen Hülsenteils 7.15 des Einsteckteils 7.1' verschiebbar ist.

Die Ausführung der Erfindung ist nicht auf die in der Zeichnung dargestellten Ausführungsbeispiele beschränkt. So kann anstelle eines als T-Stück ausgebildeten Anschlussstücks 4 beispielsweise auch ein Anschlussstück verwendet werden, dass als Abzweig oder Rohrbogen ausgebildet ist. Des Weiteren kann das erfindungsgemäß verwendete Rohrleitungssystem mit Brandschutzdämmung zur Trennung bzw. Abschottung von Brandabschnitten insbesondere auch bei Wanddurchführungen zum Einsatz kommen.

## Patentansprüche

1. Verwendung eines Rohrleitungssystems, das mindestens eine metallene Rohrleitung (3) zur Durchdringung einer Gebäudedecke (1) oder Gebäudewand umfasst, in einer Abschottung eines Brandabschnittes eines Gebäudeteils gegenüber einem anderen Gebäudeteil des selben Gebäudes, wobei die Abschottung eine Gebäudedecke (1) oder Gebäudewand des Gebäudes umfasst, welche durch die mindestens eine metallene Rohrleitung (3) durchdrungen wird, wobei das Rohrleitungssystem des Weiteren mindestens eine Etagenleitung (5) umfasst, die als Kunststoffrohrleitung oder Kunststoff-Metall-Mehrschichtverbundrohrleitung ausgeführt und an einem mit der metallenen Rohrleitung (3) verbundenen metallenen Anschlussstück (4) angeschlossen ist, wobei die metallene Rohrleitung (3), das Anschlussstück (4) und die Etagenleitung (5) mit einer mantelförmigen Brandschutzdämmung (9.1, 9.2) aus Mineralwolle mit einem Schmelzpunkt von über 1.000°C versehen sind, wobei das Anschlussstück (4) in Form eines T-Stücks, Bogens oder Abzweigs ausgeführt ist und plastisch verformbare Pressverbindungsabschnitte (4.1) aufweist, die jeweils mit einem Ringwulst (4.2) und einem darin aufgenommenen Dichtungsring (6) versehen sind, wobei die Etagenleitung (5) über ein Übergangsstück (7, 7') an dem Anschlussstück (4) angeschlossen ist, wobei das Übergangsstück (7, 7') ein hülsenförmiges Einsteckteil (7.1, 7.1') und einen Pressring (7.2, 7.2') aufweist, wobei das Einsteckteil (7.1, 7.1') in die Etagenleitung (5) eingesteckt und mit dem Anschlussstück (4) verbunden ist, wobei der Abstand (A) der mittels des Pressrings (7.2, 7.2') mit dem Einsteckteil (7.1, 7.1') pressverbundenen Etagenleitung (5) von der Mittelachse (M) der metallenen Rohrleitung (3) in einem Bereich von 35 mm bis 150 mm liegt, wobei die die metallene Rohrleitung (3) ummantelnde Brandschutzdämmung (9.1) eine Dämmdicke im Bereich von 20 bis 60 mm aufweist, wobei die die Etagenleitung (5) ummantelnde Brandschutzdämmung (9.2) eine Dämmdicke im Bereich von 15 bis 25 mm aufweist, und wobei die die Etagenleitung (5) ummantelnde Brandschutzdämmung (9.2) unmittelbar an die die metallene Rohrleitung (3) ummantelnde Brandschutzdämmung (9.1) anschließt und eine Länge von mindestens 10 mm und maximal 320 mm gemessen ab der die metallene Rohrleitung (3) ummantelnden Brandschutzdämmung (9.1) aufweist.

2. Verwendung nach Anspruch 1, **dadurch gekennzeichnet, dass** der Abstand (A) der pressverbundenen Etagenleitung (5) von der Mittelachse (M) der metallenen Rohrleitung (3) das 2-fache bis 3-fache, vorzugsweise das 2,2-fache bis 2,7-fache, des Außendurchmessers (d) der metallenen Rohrleitung (3) beträgt.

3. Verwendung nach Anspruch 1 oder 2, **dadurch gekennzeichnet, dass** das Übergangsstück (7, 7') eine das Einsteckteil (7.1, 7.1') mit dem Pressring (7.2, 7.2') verbindende, ring- oder hülsenförmige Halterung (7.3, 7.3') aus Kunststoff, vorzugsweise aus Polyphenylensulfon, Polysulfon oder Polyethersulfon, aufweist.

4. Verwendung nach einem der Ansprüche 1 bis 3, **dadurch gekennzeichnet, dass** der Pressring (7.2) aus plastisch verformbaren Material hergestellt ist.

5. Verwendung nach einem der Ansprüche 1 bis 4, **dadurch gekennzeichnet, dass** ein innerhalb des Pressrings (7.2) angeordneter Stützabschnitt (7.13) des hülsenförmigen Einsteckteils (7.1) außenseitig mit einem Dichtungsring (8) versehen ist.

6. Verwendung nach Anspruch 3, **dadurch gekennzeichnet, dass** das hülsenförmige Einsteckteil (7.1') aus einem metallenen Hülsenteil (7.15) und einem damit verbundenen hülsenförmigen Stützkörper (7.16) aus Kunststoff, vorzugsweise aus Polyphenylensulfon, Polysulfon oder Polyethersulfon, gebildet ist, wobei der Stützkörper (7.16) koaxial innerhalb des Pressrings (7.2') und der hülsenförmigen Halterung (7.3') angeordnet ist.

7. Verwendung nach Anspruch 6, **dadurch gekennzeichnet, dass** der Pressring (7.2') und die hülsenförmige Halterung (7.3') konische, aneinander liegende Kontaktflächen aufweisen, wobei der Pressring (7.2') unter radialer Pressung der hülsenförmigen Halterung (7.3') axial zu derselben in Richtung des metallenen Hülsenteils (7.15) des Einsteckteils (7.1') verschiebbar ist.

8. Verwendung nach einem der Ansprüche 1 bis 7, **dadurch gekennzeichnet, dass** die die metallene Rohrleitung (3) ummantelnde Brandschutzdämmung (9.1) eine Dämmdicke im Bereich von 20 bis 50 mm aufweist

9. Verwendung nach einem der Ansprüche 1 bis 8, **dadurch gekennzeichnet, dass** die die metallene Rohrleitung (3) unterhalb der Gebäudedecke (1) ummantelnde Brandschutzdämmung (9.1) eine Länge von mindestens 900 mm, vorzugsweise mindestens 2.000 mm, gemessen ab Oberseite der Gebäudedecke (1), aufweist.

10. Verwendung nach einem der Ansprüche 1 bis 9, **dadurch gekennzeichnet, dass** die die Etagenleitung (5) ummantelnde Brandschutzdämmung (9.2) eine Dämmdicke im Bereich von 18 bis 22 mm aufweist.

11. Verwendung nach einem der Ansprüche 1 bis 10, **dadurch gekennzeichnet, dass** die die Etagenleitung (5) ummantelnde Brandschutzdämmung (9.2) eine Länge von mindestens 50 mm und maximal 320 mmgemessen ab der die metallene Rohrleitung (3) ummantelnden Brandschutzdämmung (9.1) aufweist.

12. Verwendung nach einem der Ansprüche 1 bis 11, **dadurch gekennzeichnet, dass** die die Etagenleitung (5) ummantelnde Brandschutzdämmung (9.2) eine Länge von mindestens 10 mm und maximal 150 mm gemessen ab der die metallene Rohrleitung (3) ummantelnden Brandschutzdämmung (9.1), aufweist.

13. Verwendung nach einem der Ansprüche 1 bis 12, **dadurch gekennzeichnet, dass** das mit der metallenen Rohrleitung (3) verbundene Anschlussstück (4) so angeordnet ist, dass die die Etagenleitung (5) ummantelnde Brandschutzdämmung (9.2) die Gebäudedecke (1) oder Gebäudewand berührt oder von der Gebäudedecke (1) oder Gebäudewand in einem Abstand von maximal 50 mm angeordnet ist.

## Claims

1. Use of a piping system comprising at least one metal pipeline (3) for penetrating a building ceiling (1) or building wall, in a sealing of a fire section of a building part with respect to another building part of the same building, wherein the sealing comprises a building ceiling (1) or building wall of the building which is penetrated by the at least one metal pipeline (3), wherein the piping system further comprises at least one floor pipeline (5), which is designed as a plastic piping or plastic-metal multilayer composite piping and is connected to a metal connecting piece (4) connected to the metal pipeline (3), wherein the metal pipeline (3), the connecting piece (4) and the floor pipeline (5) are provided with a jacket-shaped fire protection insulation (9.1, 9.2) made of mineral wool having a melting point of more than 1,000°C, wherein the connecting piece (4) is designed in the form of a T-piece, bend or branch and has plastically deformable press-fit connection sections (4.1) which are each provided with an annular bead (4.2) and a sealing ring (6) accommodated therein, wherein the floor pipeline (5) is connected to the connecting piece (4) via a transition piece (7, 7'), wherein the transition piece (7, 7') comprises a sleeve-shaped insertion part (7.1, 7.1') and a press ring (7.2, 7.2'), the insertion part (7.1, 7.1') being inserted into the floor pipeline (5) and connected to the connection piece (4), the distance (A) of the floor pipeline (5) press-connected to the insertion part (7.1, 7.1') from the central axis (M) of the metal pipeline (3) lies in a range from 35 mm to 150 mm, wherein the fire protection insulation (9.1) encasing the metal pipeline (3) has an insulation thickness in the range from 20 to 60 mm, wherein the fire protection insulation (9.2) has an insulation thickness in the range from 15 to 25 mm, and wherein the fire protection insulation (9.2) encasing the floor pipeline (5) directly adjoins the fire protection insulation (9.1) encasing the metal pipeline (3) and has a length of at least 10 mm and at most 320 mm measured from the fire protection insulation (9.1) encasing the metal pipeline (3).

2. Use according to claim 1, **characterized in that** the distance (A) of the press-connected floor pipeline (5) from the central axis (M) of the metal pipeline (3) is 2 times to 3 times, preferably 2.2 times to 2.7 times, the outer diameter (d) of the metal pipeline (3).

3. Use according to claim 1 or 2, **characterized in that** the transition piece (7, 7') has an annular or sleeve-shaped holder (7.3, 7.3') made of plastic, preferably of polyphenylene sulfone, polysulfone or polyether sulfone, connecting the insertion part (7.1, 7.1') to the press ring (7.2, 7.2').

4. Use according to any one of claims 1 to 3, **characterized in that** the press ring (7.2) is made of plastically deformable material.

5. Use according to any one of the claims 1 to 4, **characterized in that** a supporting section (7.13) of the sleeve-shaped insertion part (7.1) arranged inside the press ring (7.2) is provided on the outside with a sealing ring (8).

6. Use according to claim 3, **characterized in that** the sleeve-shaped insertion part (7.1') is formed from a metal sleeve part (7.15) and a sleeve-shaped supporting body (7.16) connected thereto and made of plastic, preferably polyphenylene sulfone, polysulfone or polyether sulfone, the supporting body (7.16) being arranged coaxially inside the press ring (7.2') and the sleeve-shaped holder (7.3').

7. Use according to claim 6, **characterized in that** the press ring (7.2') and the sleeve-shaped holder (7.3') have conical contact surfaces lying against one another, the press ring (7.2') being displaceable axially with respect to the sleeve-shaped holder (7.3') under radial pressure of the latter in the direction of the metal sleeve part (7.15) of the insertion part (7.1').

8. Use according to any one of the claims 1 to 7, **characterized in that** the fire protection insulation (9.1) encasing the metal pipeline (3) has an insulation thickness in the range from 20 to 50 mm.

9. Use according to any one of claims 1 to 8, **characterized in that** the fire protection insulation (9.1) encasing the metal pipeline (3) below the building ceiling (1) has a length of at least 900 mm, preferably at least 2,000 mm, measured from the top of the building ceiling (1).

10. Use according to any one of the claims 1 to 9, **characterized in that** the fire protection insulation (9.2) encasing the floor pipeline (5) has an insulation thickness in the range from 18 to 22 mm.

11. Use according to any one of claims 1 to 10, **characterized in that** the fire protection insulation (9.2) encasing the floor pipeline (5) has a length of at least 50 mm and at most 320 mm measured from the fire protection insulation (9.1) encasing the metal pipeline (3).

12. Use according to any one of claims 1 to 11, **characterized in that** the fire protection insulation (9.2) encasing the floor pipeline (5) has a length of at least 10 mm and at most 150 mm measured from the fire protection insulation (9.1) encasing the metal pipeline (3).

13. Use according to any one of the claims 1 to 12, **characterized in that** the connecting piece (4) connected to the metal pipeline (3) is arranged in such a way that the fire protection insulation (9.2) encasing the floor pipeline (5) touches the building ceiling (1) or building wall or is arranged at a distance of at most 50 mm from the building ceiling (1) or building wall.

## Revendications

1. Utilisation d'un système de conduite qui comporte au moins une conduite métallique (3) destinée à pénétrer un plafond de bâtiment (1) ou une paroi de bâtiment, dans un cloisonnement d'un compartiment coupe-feu d'une partie de bâtiment par rapport à une autre partie du bâtiment du même bâtiment, le cloisonnement comportant un plafond de bâtiment (1) ou une paroi de bâtiment du bâtiment qui est traversé(e) par au moins une conduite métallique (3), le système de conduite comportant également au moins une conduite pour l'étage (5) qui est réalisée en tant que conduite en matière plastique ou conduite composite multicouche en matière pastique - métal et qui est raccordée à un élément de raccord (4) relié à la conduite métallique (3), la conduite métallique (3), l'élément de raccord (4) et la conduite pour étage (5) étant pourvus d'une isolation anti-feu en forme d'enveloppe (9.1, 9.2) en laine minérale avec un point de fusion supérieur à 1000 degrés Celsius, l'élément de raccord (4) étant réalisé sous la forme d'une pièce en T, d'un arc ou d'une embranchement et présentant des sections d'assemblage par compression (4.1) à déformation plastique qui sont pourvues respectivement d'un bourrelet annulaire (4.2) et d'un anneau d'étanchéité (6) y étant logé, la conduite pour étage (5) étant raccordée grâce à une pièce de transition (7, 7') à l'élément de raccord (4), la pièce de transition (7, 7') présentant une pièce emboîtable en forme de douille (7.1, 7.1') et un anneau de serrage (7.2, 7.2'), la pièce emboîtable (7.1, 7.1') étant insérée dans la conduite par étage (5) et étant reliée à l'élément de raccord (4), la distance (A) de la conduite pour étage (5), étant reliée par compression à l'aide de l'anneau de serrage (7.2, 7.2') à la pièce emboitable (7.1, 7.1'), de l'axe médian (M) de la conduite métallique (3) étant de l'ordre de 35 mm à 150 mm, l'isolation anti-feu (9.1) enveloppant la conduite métallique (3) présentant une épaisseur d'isolation étant de l'ordre de 20 à 60 mm, l'isolation anti-feu (9.2) enveloppant la conduite pour étage (5) présentant une épaisseur d'isolation étant de l'ordre de 15 à 25 mm, et l'isolation anti-feu (9.2) enveloppant la conduite pour étage (5) se raccorde directement à l'isolation anti-feu (9.1) enveloppant la conduite métallique (3) et présente une longueur d'au moins 10 mm et tout au plus de 320 mm, mesurée à partir de l'isolation anti-feu (9.1) enveloppant la conduite métallique (3).

2. Utilisation selon la revendication 1, **caractérisée en ce que** la distance (A) de la conduite pour étage (5) reliée par compression, à partir de l'axe médian (M) de la conduite métallique (3), est de 2 à 3 fois, de préférence de 2,2 à 2,7 fois, le diamètre extérieur (d) de la conduite métallique (3).

3. Utilisation selon la revendication 1 ou 2, **caractérisée en ce que** la pièce de transition (7, 7') présente un support (7.3, 7.3'), en forme de douille ou de bague reliant la pièce emboitable (7.1, 7.1') à l'anneau de serrage (7.2, 7.2'), en matière synthétique, de préférence en polyphénylènesulfones, polysulfon ou polyéthersulfon.

4. Utilisation selon l'une des revendications 1 à 3, **caractérisée en ce que** l'anneau de serrage (7.2) est fabriqué à partir d'un matériau à déformation plastique.

5. Utilisation selon l'une des revendications 1 à 4, **caractérisée en ce qu'**une section d'appui (7.13) de la pièce emboitable (7.1) en forme de douille agencée à l'intérieur de l'anneau de serrage (7.2) est pourvue, côté extérieur, d'une bague d'étanchéité (8).

6. Utilisation selon la revendication 3, **caractérisée en ce que** la pièce emboitable (7.1) en forme de douille est formée à partir d'une partie de douille métallique (7.15) et d'un corps de support (7.16), en forme de douille et y étant relié, en matière synthétique, de préférence en polyphénylènesulfones, polysulfon ou polyéthersulfon, le corps de support (7.16) étant coaxialement agencé à l'intérieur de l'anneau de serrage (7.2') et du support (7.3') en forme de douille.

7. Utilisation selon la revendication 6, **caractérisée en ce que** l'anneau de serrage (7.2') et le support en forme de douille (7.3') présentent des surfaces de contact coniques adjacentes, l'anneau de serrage (7.2') étant susceptible d'être déplacé, sous une pression radiale du support en forme de douille (7.3'), axialement par rapport à celui-ci, en direction de la partie de douille métallique (7.15) de la pièce emboitable (7.1').

8. Utilisation selon l'une des revendications 1 à 7, **caractérisée en ce que** l'isolation anti-feu (9.1) enveloppant la conduite métallique (3) présente une épaisseur d'isolant de l'ordre de 20 à 50 mm.

9. Utilisation selon l'une des revendications 1 à 8, **caractérisée en ce que** l'isolation anti-feu (9.1) enveloppant la conduite métallique (3) en dessous du plafond du bâtiment (1) présente une longueur d'au moins 900 mm, de préférence d'au moins 2000 mm, mesurée à partir de la partie supérieure du plafond du bâtiment (1).

10. Utilisation selon l'une des revendications 1 à 9, **caractérisée en ce que** l'isolation anti-feu (9.2) enveloppant la conduite pour étage (5) présente une épaisseur d'isolant de l'ordre de 18 à 22 mm.

11. Utilisation selon l'une des revendications 1 à 10, **caractérisée en ce que** l'isolation anti-feu (9.2) enveloppant la conduite pour étage (5) présente une longueur d'au moins 50 mm et tout au plus de 320 mm, mesurée à partir de l'isolation anti-feu (9.1) enveloppant la conduite métallique (3).

12. Utilisation selon l'une des revendications 1 à 11, **caractérisée en ce que** l'isolation anti-feu (9.2) enveloppant la conduite pour étage (5) présente une longueur d'au moins 10 mm et tout au plus de 150 mm, mesurée à partir de l'isolation anti-feu (9.1) enveloppant la conduite métallique (3).

13. Utilisation selon l'une des revendications 1 à 12, **caractérisée en ce que** l'élément de raccord (4) relié à la conduite métallique (3) est agencé de telle sorte que l'isolation anti-feu (9.2) enveloppant la conduite pour étage (5) touche le plafond de bâtiment (1) ou la paroi de bâtiment ou est agencé à une distance tout au plus de 50 mm du plafond de bâtiment (1) ou de la paroi de bâtiment.
